Europäisches Patentamt

European Patent Office

Office européen des brevets

(11) Numéro de publication: **0 543 716 B1**

# (12) FASCICULE DE BREVET EUROPEEN

(45) Date de publication du fascicule du brevet: **27.09.95**

(51) Int. Cl.⁶: **B01D 53/86**, B01J 23/84

(21) Numéro de dépôt: **92403081.0**

(22) Date de dépôt: **17.11.92**

(54) **Catalyseurs pour moteurs diesel et moteur diesel équipé d'un filtre incorporant un tel catalyseur.**

(30) Priorité: **20.11.91 FR 9114301**

(43) Date de publication de la demande:
**26.05.93 Bulletin 93/21**

(45) Mention de la délivrance du brevet:
**27.09.95 Bulletin 95/39**

(84) Etats contractants désignés:
**DE ES GB IT**

(56) Documents cités:
**US-A- 4 221 768**

**DATABASE WPIL, NO. 87-166248 DERWENT PUBLICATIONS LTD., LONDON, GB & JP-A-62097630 (NIPPON SHOKUBAI) 07-05-87**

(73) Titulaire: **REGIE NATIONALE DES USINES RENAULT S.A.**
**34, Ouai du Point du Jour**
**F-92109 Boulogne Billancourt (FR)**

(72) Inventeur: **Meriaudeau, Paul**
**La Tranclière**
**F-01160 Pont d'Ain (FR)**
Inventeur: **Perrichon, Vincent**
**57, rue Pierre Brunier**
**F-69300 Caluire (FR)**
Inventeur: **Bellahoui, Achour**
**42, Avenue Jean-François Raclet**
**F-69007 Lyon (FR)**

## Description

Au cours des dernières années, le moteur Diesel s'est considérablement développé et cette évolution a été relativement bénéfique pour la pollution atmosphérique, puisqu'un moteur Diesel rejette 25 fois moins de monoxyde de carbone, 15 fois moins d'hydrocarbures et 2 fois moins d'oxydes d'azote qu'un moteur essence de même puissance. Il présente cependant un inconvénient majeur pour l'environnement en émettant des "fumées noires" ou "suies" qui sont constituées de fines particules de carbone contenant des hydrocarbures adsorbés, dont une forte proportion est formée de molécules aromatiques polycycliques reconnues comme cancérigènes.

Une des solutions retenues pour éliminer ces "suies Diesel" est d'utiliser des filtres à particules mais se pose le problème d'un bouchage rapide du filtre. Pour éviter cet encrassement des filtres, on a tenté d'utiliser la combustion catalytique des particules. Dans ce cas, un catalyseur déposé sur le filtre abaisse suffisamment la température d'oxydation des particules carbonées pour permettre le "brûlage" complet de la suie à la température des gaz d'échappement Diesel. Dans le cas d'une conduite urbaine, cette température est faible, de l'ordre de 250-300°C. Comme la température de combustion de ces particules en l'absence de catalyseur est voisine de 600-650°C, il est donc nécessaire de trouver des formules catalytiques très efficaces pour abaisser la température d'au moins 300°C. De plus les gaz d'échappement Diesel contiennent des quantités non négligeables d'oxydes de soufre, entre 40 et 200 ppm. Les catalyseurs doivent donc être peu sensibles à un empoisonnement par $SO_2$ ou $SO_3$. En outre, ils ne doivent pas piéger ces composés à basse température (inférieure à 300°C) sous forme de sulfates pour les réémettre à plus haute température à des teneurs plus élevées. Enfin, ils doivent assurer l'oxydation totale en $CO_2$, c'est-à-dire présenter une sélectivité en monoxyde de carbone la plus faible possible.

Les catalyseurs proposés pour résoudre ce problème se classent parmi les catalyseurs d'oxydation totale, essentiellement les métaux précieux, et les oxydes des métaux de transition. De nombreuses formulations proposées contiennent en fait ces deux phases actives déposées sur un support.

Dans le document publié dans "Catalysis and Automotive Pollution Control ", A. Frennet eds., Studies in Surface, Elsevier, Amsterdam, Vol. 30 (1987) 457, les auteurs Marinangelli et coll. ont étudié des monolithes contenant du platine, du palladium et des oxydes de chrome et de cuivre déposés sur alumine. Ils ont conclu à la meilleure efficacité des métaux précieux pour amorcer la combustion et mis en évidence l'empoisonnement des oxydes $CuO$ et $Cr_2O_3$ par le soufre. Ces études sont reprises dans le brevet U.S. 4.759.918 revendiquant un catalyseur $Pt/TiO_2$ résistant au soufre, y compris également des catalyseurs à base de Pt, Pd et Rh sur $TiO_2$, zircone, silice, silice-alumine et alumine traitées pour résister au soufre.

McCabe et Sinkevitch dans la revue SAE, paper 870009, 1987, ont testé des filtres à particules avec un catalyseur au platine ou à l'argent. Malgré l'effet catalytique, il est nécessaire d'avoir des températures supérieures à 500°C pour obtenir l'oxydation des particules.

Au contraire, Cooper et Thoss dans la publication SAE, paper 89404, 1989, ont observé une régénération complète du filtre vers 300°C en utilisant des catalyseurs à base de platine.

Dans les brevets américains 4.515.758 et 4.588.707, on rapporte l'utilisation d'un système catalytique comportant du Re, $Li_2O$, $CuCl_2$, $V_2O_5$, et des métaux nobles, alors que le brevet américain 4.303.552 étudie un catalyseur complexe associant Pt, Cr et un oxyde réfractaire $HfO_2$ déposés sur monolithe.

On peut cependant considérer que les oxydes métalliques supportés sont potentiellement préférables. En effet, la combustion nécessite de développer la plus grande interface possible entre la particule carbonée et le catalyseur. La concentration en phase active doit donc être importante, ce qui exclut les métaux précieux compte tenu de leur coût élevé. Jusqu'à ce jour, les résultats publiés sur la combustion catalytique des suies conduisent à une sélection de phases actives proche de celle que l'on obtient à partir des résultats publiés sur l'oxydation catalytique des graphites et des carbones, à savoir que les meilleurs systèmes sont ceux à base d'oxydes de vanadium, cuivre ou manganèse.

Ainsi Hillenbrand et Trayser dans la revue SAE, paper 811236, 1981, ont observé que les sels de Cu, Na, Co et Mn abaissent la température de combustion des suies. Cet effet de Cu, Mn mais également de Pb a été mis en évidence par McCabe et Sinkevitch sur des suies modifiées par ces additifs dans la publication SAE, paper 860011, 1986. Le manganèse est également préféré au césium et au cuivre comme additifs par Dainthy et coll. SAE paper 870014 (1987).

Watabe et coll. SAE, paper 830082, 1983, ont réalisé une étude très détaillée de la combustion de suies imprégnées par différents sels métalliques ou mélangées mécaniquement avec des phases oxydes supportées sur divers supports, essentiellement sur silice-alumine. Les meilleurs résultats ont été obtenus avec des catalyseurs $CuCl_2$ -KCl-$NH_4$ $VO_3$ et $CuCl_2$ -KCl-$(NH_4)_6 Mo_7 O_{24}$ supportés sur

oxyde de titane, les températures de combustion étant abaissées jusque vers 320-370°C.

Des formulations semblables Cu-V-K déposées sur alumine ont été également proposées dans le brevet italien No. A 40421/88. De la même manière Ahlström et Odenbrand dans "Applied Catalysis" 60-1990 - 143 et 157, après avoir sélectionné, parmi de nombreux systèmes, $V_2O_5$ comme le meilleur oxyde résistant au soufre, proposent comme catalyseur de combustion un oxyde mixte de $V_2O_5$ et CuO promu par une faible teneur en platine.

Cependant, il est difficile de comparer entre eux les résultats de ces différents travaux, car les conditions expérimentales diffèrent. Néanmoins, il apparaît que les métaux précieux ne sont pas les éléments les plus actifs et que les systèmes à base de cuivre et vanadium conduisent aux vitesses de combustion les plus grandes. L'oxyde de vanadium présente pourtant un inconvénient majeur pour une application industrielle. En effet, son faible point de fusion (670°C) rend difficile son utilisation prolongée dans un filtre à particules qui peut fréquemment être soumis à des températures excédant 600°C.

La présente invention vise un catalyseur présentant au moins les mêmes qualités que le vanadium, sans pour autant être sensible à de telles surchauffes et cet objectif de l'invention est atteint en ce que ledit catalyseur associe, outre Cu et un alcalin tel K, un autre constituant métallique, qui contient du niobium Nb et/ou du tantale Ta.

Les résultats de la présente invention montrent que, par rapport à des systèmes Cu-V-K ou Cu-Mo-K de l'art antérieur, l'on abaisse encore la température de combustion des suies de moteur Diesel en utilisant des systèmes catalytiques à base de Cu-Nb et K ou Cu-Ta et K supportés sur un oxyde inorganique réfractaire, de préférence l'oxyde de lanthane, le dioxomonocarbonate de lanthane ou l'oxyde de titane. Par ailleurs ces catalyseurs se sont révélés stables thermiquement, résistants à un empoisonnement par $SO_2$ et présentant une faible sélectivité en CO.

Selon l'invention la teneur globale des constituants actifs rapportée au poids du support est comprise entre 1 et 20 mmol par gramme de support et de préférence, la teneur du constituant cuivre est de l'ordre de 4 mmol par gramme de support, alors que la teneur du constituant Nb et/ou Ta est de l'ordre de 2 mmol par gramme de support et que celle de l'alcalin tel K est de l'ordre de 2 mmol par gramme de support.

Le catalyseur selon l'invention est préparé par imprégnations successives ou co-imprégnation à sec du support poreux par des solutions de sels des constituants actifs, puis calcination à une température comprise entre 400 et 800°C dans un gaz tel air, oxygène, ou gaz inerte tel argon ou azote.

L'invention concerne également un moteur à combustion Diesel équipé d'un filtre pour la combustion catalytique des suies, du type à constituants actifs multiples tel que rappelé précédemment.

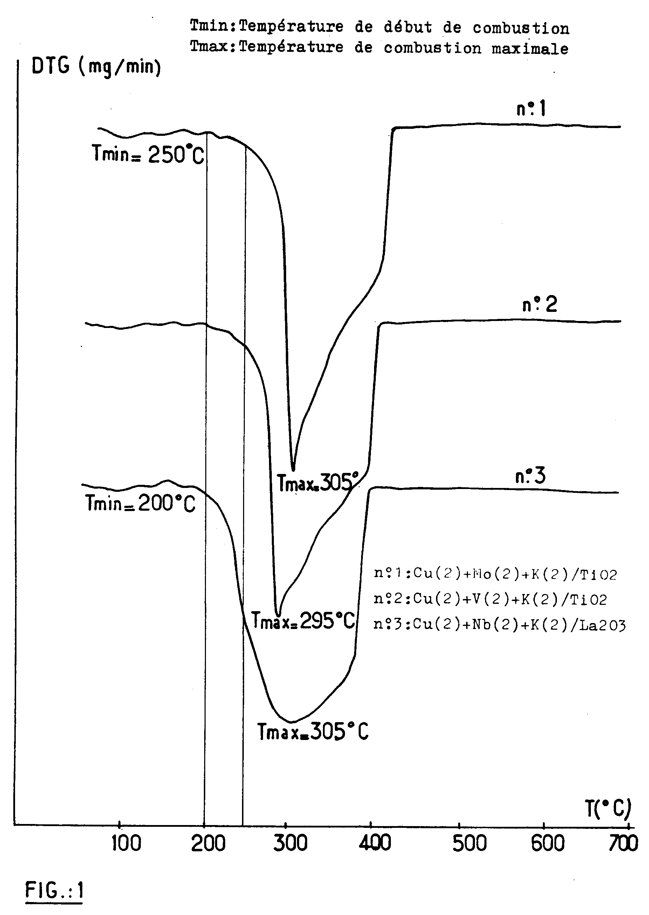

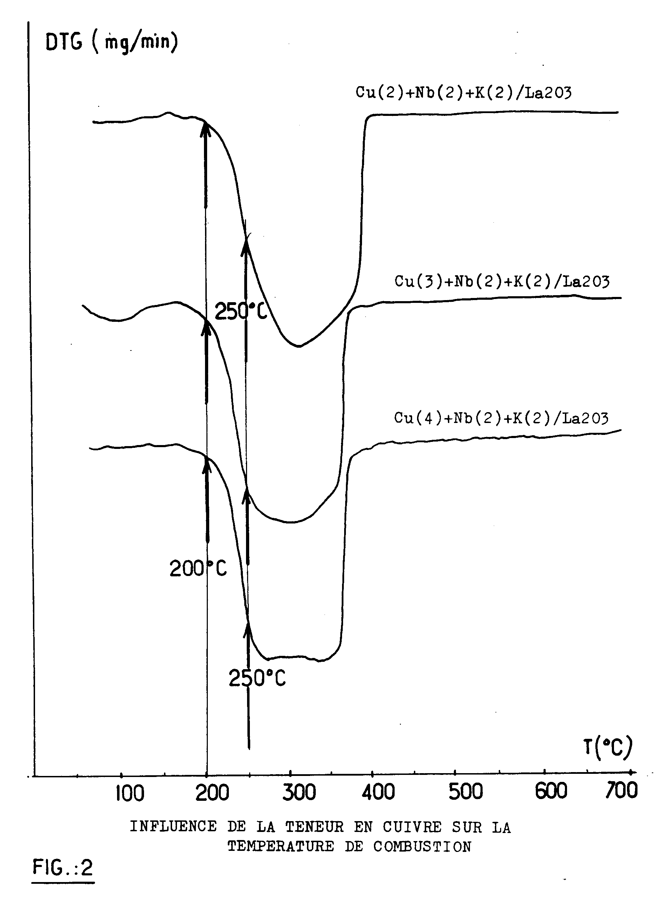

On détaille maintenant des résultats expérimentaux, dont certains sont analysés en référence aux figures 1 et 2, qui sont des diagrammes représentatifs de la combustion (en ordonnée) en fonction de la température en abscisse, pour différents catalyseurs n° 1 et n° 2 selon l'état antérieur de la technique, n° 3 selon l'invention à la figure 1, ou pour trois catalyseurs selon l'invention à teneurs différentes en cuivre à la figure 2.

PARTIE EXPERIMENTALE

La combustion catalytique des suies de moteur Diesel étant une réaction "gaz-solide-solide", la qualité du contact entre la suie et le catalyseur est d'autant plus importante que le catalyseur est plus actif. Aussi pour pouvoir comparer valablement la réactivité de nos catalyseurs, on a adopté le protocole de mélange suivant : 400 mg de catalyseur + 100 mg de suie sont mélangés pendant 30 min dans un broyeur à billes d'acier sous atmosphère d'argon. On a vérifié que cette procédure conduit à des résultats parfaitement reproductibles.

La combustion des mélanges ainsi préparés a été étudiée en dynamique à l'aide de deux appareillages :
- Un ensemble "ATG-DTG-ATD" avec possibilité d'analyse des gaz formés par couplage avec un spectromètre de masse.
- Un microréacteur avec analyse des gaz CO et $CO_2$ par chromatographie en phase gazeuse.

Les essais ont été effectués en montée linéaire de température, avec une vitesse de 0,8°C/min dans le microréacteur et de 5°C/min pour l'ensemble gravimétrique. Pour cette raison, les températures singulières des courbes de combustion déterminées par "ATG-DTG" sont légèrement supérieures à celles équivalentes obtenues avec le microréacteur.

Comme les gaz d'échappement Diesel contiennent des quantités non négligeables de $SO_2$ (40 à 200 ppm), on a étudié son influence sur la combustion. Des essais préliminaires en thermobalance ont montré que cet empoisonnement était un phénomène lent et qu'il était nécessaire de traiter les catalyseurs au préalable sous $SO_2$ pour permettre un empoisonnement effectif du catalyseur. Le protocole expérimental a donc consisté à prétraiter le catalyseur sous flux de 15%$O_2$ + 100ppm $SO_2$ + Ar (ou $N_2$).

Les résultats de combustion pour les différents catalyseurs sont résumés plus loin à l'aide de deux paramètres :

- Tmax : température déterminée en thermobalance pour laquelle la vitesse de combustion est maximum.
- Sco = [CO] / [CO + CO$_2$] : valeur de sélectivité en CO obtenue à Tmax dans le microréacteur.

PREPARATION DES CATALYSEURS

Les catalyseurs ont été préparés par imprégnation à sec d'un support préalablement désorbé à 80°C pendant 15h. Les sels des différents composants (Cu, Nb, Ta et K) ont été introduits soit par imprégnations successives, soit par co-imprégnation. Après traitement sous vide à 80°C, les solides résultants ont été calcinés sous flux d'air à 800°C pendant 2 h. Ils ont ensuite été chauffés pendant 6h à 350°C sous flux de 15% O$_2$ + 100 ppm SO$_2$ dans l'azote.

Les détails de ces préparations sont donnés dans les exemples 1 à 11 ci-dessous destinés à illustrer l'intérêt de ces catalyseurs.

EXEMPLE 1 : DESCRIPTION DES TESTS DE COMBUSTION.

Dans cet exemple est décrit le protocole utilisé pour mesurer la réactivité d'un oxyde d'aluminium choisi pour sa faible activité catalytique.

Des particules de suies sont récupérées à l'aide d'un filtre à la sortie d'un brûleur alimenté au gasoil. Elles ont un taux de carbone élevé (80,5%) et un rapport C/H = 5,8 relativement faible, ce qui leur confère a priori une faible réactivité.

400 mg de support alumine gamma sont placés dans un réacteur en quartz et chauffés pendant 6 h à 350°C sous un flux de 15%O$_2$ + 100 ppm SO$_2$ dans l'azote. Après refroidissement à la température ambiante, les 400 mg sont placés dans un container en acier avec 100 mg de suie et 4 billes d'acier. Après une purge sous argon, l'ensemble est agité vigoureusement pendant deux fois quinze minutes.

Pour réaliser la combustion du mélange ainsi préparé, une trentaine de mg est prélevée et placée dans un creuset en alumine suspendu au fléau d'une microbalance "SETARAM ATG-ATD-92". L'ensemble est chauffé à une vitesse de 5°C/min sous un flux de 15%O$_2$ + 100ppm SO$_2$ dans l'argon. Les teneurs en oxygène et anhydride sulfureux sont représentatives de la composition des échappements Diesel. Dans ces conditions, la vitesse de combustion déterminée par gravimétrie est maximum à Tmax = 600°C.

Pour déterminer la sélectivité en monoxyde de carbone, Sco, il est nécessaire de mesurer la concentration en CO et CO$_2$ dans les produits de combustion. L'analyse quantitative précise par spectrométrie de masse s'étant révélée impossible dans les conditions expérimentales, un deuxième test de combustion a été effectué dans un microréacteur couplé à une analyse chromatographique. Pour cela, 100 mg du mélange sont à nouveau prélevés, dilués dans 250 mg de silice, placés dans un microréacteur en quartz et chauffés sous le même mélange réactionnel à la vitesse de 0,8°C/min. Par analyse de CO et CO$_2$ dans les produits de réaction, on obtient, à Tmax, une sélectivité Sco = 30%.

EXEMPLE 2 : PREPARATION D'UN CATALYSEUR Cu-Nb-K/SUPPORT PAR IMPREGNATIONS SUCCESSIVES.

Un catalyseur Cu(3) + Nb(2) + K(2)/La$_2$O$_2$CO$_3$ a été préparé de la manière suivante :

10 g de dioxomonocarbonate de lanthane sont traités sous vide à 80°C pendant 15 h de manière à éliminer l'eau contenue dans la porosité du solide. Le volume d'imprégnation à sec mesuré étant de 2,5 ml/g, ces 10 g sont ensuite imprégnés par 25 ml d'une solution aqueuse contenant 289,9 g/l de Cu (NO$_3$)$_2$, 3H$_2$O. Après une bonne homogénéisation de la pâte obtenue et mûrissement pendant 4 h à l'air, le solide résultant est de nouveau traité sous vide à 80°C pendant 15 h. On obtient ainsi un solide Cu(3)/La$_2$O$_2$CO$_3$.

Par la même procédure, on imprègne à sec ce dernier solide par 25 ml d'une solution éthanolique contenant 216,1 g/l de NbCl$_5$. Après mûrissement à l'air pendant 4 h et désorption à 80°C pendant 15 h, le solide résultant est imprégné à nouveau avec 25ml d'une solution aqueuse contenant 80,9 g/l de KNO$_3$. Après mûrissement pendant 4 h sous air et séchage sous vide à l'étuve à 80°C pendant 15 h, le catalyseur est traité sous flux d'air à 800°C pendant 2 h, après une montée linéaire de température de 7°C/min.

Cet échantillon ayant été imprégné respectivement par 3, 2 et 2 mmol de Cu, Nb et K par gramme de support, est référencé Cu(3) + Nb(2)-+ K(2)/La$_2$O$_2$CO$_3$. Son activité catalytique a été évaluée selon les tests décrits dans l'exemple 1. On obtient une forte diminution de la température de combustion de la suie, la vitesse de combustion étant maximum à Tmax = 320°C. La sélectivité Sco est égale à 8-10%.

EXEMPLE 3 : COMPARAISON AVEC L'ART ANTERIEUR.

Dans cet exemple on a comparé la vitesse de combustion d'un catalyseur $Cu(2) + Nb(2) + K(2)/La_2O_2CO_3$ selon la présente invention à celles de deux systèmes catalytiques préparés selon les formulations de l'art antérieur, à savoir les systèmes $Cu-V-K/TiO_2$ et $Cu-Mo-K/TiO_2$. Pour permettre une meilleure comparaison on a adopté les mêmes concentrations pour chacun des oxydes déposés, à savoir 2 mmol par gramme de support.

Le catalyseur $Cu(2) + Nb(2) + K(2)/La_2O_2CO_3$ a été préparé de la manière suivante :

10 g de dioxomonocarbonate de lanthane sont traités sous vide à 80°C pendant 15 h de manière à éliminer l'eau contenue dans la porosité du solide. Le volume d'imprégnation à sec mesuré étant de 25 ml/g, ces 10 g sont ensuite imprégnés par 25 ml d'une solution aqueuse contenant 193,2 g/l de $Cu(NO_3)_2, 3H_2O$. Après une bonne homogénéisation de la pâte obtenue et mûrissement pendant 4 h à l'air, le solide résultant est de nouveau traité sous vide à 80°C pendant 15 h. On obtient ainsi un solide $Cu(2)/La_2O_2CO_3$. Par la même procédure, on imprègne à sec ce dernier solide par 25 ml d'une solution éthanolique contenant 216,1 g/l de $NbCl_5$. Après mûrissement à l'air pendant 4h et désorption à 80°C pendant 15 h, le solide résultant est imprégné à nouveau avec 25 ml d'une solution aqueuse contenant 80,9 g/l de $KNO_3$. Après mûrissement pendant 4 h sous air et séchage sous vide à l'étuve à 80°C pendant 15 h, le catalyseur est traité sous flux d'air à 800°C pendant 2 h, après une montée linéaire de température de 7°C/min.

Le catalyseur $Cu(2) + V(2) + K(2)/TiO_2$ a été préparé de la manière suivante :

10 g d'oxyde de titane sont désorbés sous vide à 80°C pendant 15 h de manière à éliminer l'eau contenue dans la porosité du solide. Le volume d'imprégnation à sec mesuré étant égal à 0,8 ml/g, ces 10 g sont ensuite imprégnés par 8 ml d'une solution aqueuse contenant 603,8 g/l de $Cu(NO_3)_2, 3H_2O$. Après une bonne homogénéisation de la pâte obtenue et mûrissement pendant 4 h à l'air, le solide résultant est de nouveau traité sous vide à 80°C pendant 15 h. On obtient ainsi un solide $Cu(2)/TiO_2$. Par la même procédure, on imprègne à sec ce dernier solide par 8 ml d'une solution aqueuse contenant 292,4 g/l de $NH_4VO_3$. Après mûrissement à l'air pendant 4 h et désorption à 80°C pendant 15 h, le solide résultant est à nouveau imprégné avec 8 ml d'une solution aqueuse contenant 186,5 g/l de $KCl$. Après mûrissement sous air pendant 4 h et séchage sous vide à l'étuve à 80°C pendant 15 h, le catalyseur est traité sous flux d'air à 800°C pendant 2 h, après une montée linéaire de température de 7°C/min.

Un catalyseur $Cu(2) + Mo(2) + K(2)/TiO_2$ a été préparé selon le même mode opératoire que le catalyseur $Cu(2) + V(2) + K(2)/TiO_2$ ci-dessus en remplaçant la solution de $NH_4VO_3$ par une solution contenant 441,3g/l de $(NH_4)_6Mo_7O_{24}, 4H_2O$.

Les trois catalyseurs ainsi préparés ont été testés en analyse thermogravimétrique selon le protocole décrit dans l'exemple 1. Sur la figure 1 sont tracées les courbes représentant les vitesses de perte de poids en fonction de la température. Il est clair que le catalyseur Cu-Nb-K réalise le début de la combustion de la suie à des températures inférieures à celles observées pour les systèmes Cu-V-K et Cu-Mo-K de l'art antérieur.

EXEMPLE 4 : STABILITE THERMIQUE.

Le précurseur du catalyseur $Cu(2) + Nb(2) + K(2)/La_2O_2CO_3$ préparé selon l'exemple 3 a été calciné sous flux d'air pendant 2 h à 500°C après une montée linéaire de température de 7°C/min, puis traité 6 h à 350°C sous un flux de 15%$O_2$ + 100 ppm de $SO_2$ dans l'azote. L'activité de ce catalyseur a ensuite été évaluée selon les tests décrits dans l'exemple 1, pour la comparer avec le même catalyseur calciné à 800°C. Les résultats obtenus sont identiques dans les deux cas, à savoir une valeur de Tmax = 320°C avec Sco = 8-9%. Cet exemple montre donc qu'une augmentation de la température de calcination de 500 à 800°C ne diminue pas l'activité catalytique de ces solides qui sont donc stables thermiquement. Pour cette raison, tous les autres exemples présentés concernent des solides calcinés à 800°C.

EXEMPLE 5 : STABILITE DES CATALYSEURS EN PRESENCE DE $SO_2$.

Afin de montrer la stabilité des catalyseurs de l'invention vis-à-vis de $SO_2$, on a mesuré l'activité du solide $Cu(2) + Nb(2) + K(2)/La_2O_2CO_3$ préparé dans l'exemple 3, c'est-à-dire calciné à 800°C, mais sans qu'il subisse un prétraitement de 6h à 350°C sous 15%$O_2$ + 100 ppm de $SO_2$. Par rapport au catalyseur ayant été traité par $SO_2$, on n'observe pas de différence significative sur les courbes de combustion. Ces solides sont donc très résistants à l'empoisonnement par $SO_2$. Pour cette raison, tous les autres exemples présentés concernent des solides prétraités 6 h à 350°C sous 100 ppm de $SO_2$.

EXEMPLE 6 : INFLUENCE DE LA NATURE DES PRECURSEURS.

On a utilisé la même procédure que dans l'exemple 2 pour préparer un catalyseur référencé $Cu(3) + Nb(2) + K(2)/La_2O_3$. Dans ce cas, l'oxyde de lanthane fraîchement préparé ne contenait pas de phase dioxomonocarbonate de lanthane détectable par diffraction des rayons X. Pour introduire les trois composants, on a choisi trois sels chlorés. On a donc utilisé successivement, une solution aqueuse d'imprégnation contenant 204,6 g/l de $CuCl_2$, $2H_2O$, une solution éthanolique contenant 216,1 g/l de $NbCl_5$ et une solution aqueuse contenant 59,7 g/l de KCl.

L'évaluation de l'activité de ce catalyseur selon l'exemple 1 conduit à une valeur de Tmax proche de 300°C avec une sélectivité Sco = 5-8%.

EXEMPLE 7 : INFLUENCE DU SUPPORT.

Un catalyseur Cu(3) + Nb(2) + K(2)/$TiO_2$ a été préparé de la manière suivante :

10 g d'oxyde de titane sont désorbés sous vide à 80 °C pendant 15 h de manière à éliminer l'eau contenue dans la porosité du solide. Le volume d'imprégnation à sec mesuré étant égal à 0,8 ml/g, ces 10 g sont ensuite imprégnés par 8 ml d'une solution aqueuse contenant 371,3 g/l de CuCl. Après une bonne homogénéisation de la pâte obtenue et mûrissaient pendant 4 h à l'air, le solide résultant est de nouveau traité sous vide à 80°C pendant 15 h. On obtient ainsi un solide Cu(3)-/$TiO_2$.

Par la même procédure, on imprègne à sec ce dernier solide par 8 ml d'une solution éthanolique contenant 675,4 g/l de $NbCl_5$. Après mûrissement à l'air pendant 4 h et désorption à 80°C pendant 15 h, le solide résultant est à nouveau imprégné avec 8 ml d'une solution aqueuse contenant 186,5 g/l de KCl. Après mûrissement sous air pendant 4 h et séchage sous vide à l'étuve à 80°C pendant 15 h, le catalyseur est traité sous flux d'air à 800°C pendant 2 h, après une montée linéaire de température de 7°C/min.

L'activité catalytique de ce solide a été évaluée selon les tests décrits dans l'exemple 1. On obtient une vitesse de combustion maximum à Tmax = 300°C et une sélectivité Sco = 5-8%. Le support oxyde de titane conduit donc aux même résultats que l'oxyde de lanthane.

EXEMPLE 8 : PREPARATION D'UN CATALYSEUR Cu-Nb-K/SUPPORT PAR COIMPREGNATION.

On a préparé ces catalyseurs par co-imprégnation plutôt que par imprégnations successives. Le support oxyde de lanthane utilisé dans l'exemple 6 a servi pour cette préparation. Dans ce cas, trois solutions éthanoliques sont préparées contenant respectivement 579,9 g/l de $Cu(NO_3)_2$, $3H_2O$, 648,3 g/l de $NbCl_5$ et 204,3 g/l de $KNO_2$. Pour cette dernière, il est nécessaire de chauffer l'éthanol vers 50°C pour obtenir la solubilisation totale du sel. Dans chacune des solutions, on prélève 2,5 ml et le mélange des trois prélèvements est rapidement mis en contact avec 3 g de support préalablement traité 15 h sous vide à 80°C. L'ensemble est mélangé jusqu'à obtenir une pâte homogène, laissé 4 h à l'air à température ambiante, puis traité sous vide 15 h à 80°C. Le solide est alors calciné sous flux d'air 2 h à 800°C après une montée de température de 7°C/min.

Le catalyseur résultant, Cu(2) + Nb(2) + K(2)-/$La_2O_3$ a été testé suivant la procédure de l'exemple 1. On obtient une valeur de Tmax = 330°C et une sélectivité Sco = 6-9%.

EXEMPLE 9 : SUBSTITUTION DU NIOBIUM PAR LE TANTALE.

Le protocole opératoire de l'exemple 6 a été repris en remplaçant la solution d'imprégnation de $NbCl_5$ par une solution éthanolique contenant 286,6 g/l de $TaCl_5$. Le catalyseur obtenu Cu(3) + Ta(2)- + K(2)/$La_2O_3$ présente en test de combustion de la suie selon l'exemple 1, une valeur Tmax = 300°C et une sélectivité Sco = 9-10%.

EXEMPLE 10 : PREPARATION DE CATALYSEURS Cu-Nb-Ta-K/SUPPORT.

Le protocole opératoire de l'exemple 7 a été repris en diminuant la concentration de la solution éthanolique de $NbCl_5$ à 337,8 g/l au lieu de 675,4 g/l. D'autre part, après l'imprégnation du support $TiO_2$ par $NbCl_5$, une étape supplémentaire d'imprégnation a été réalisée en utilisant une solution éthanolique de 447,8 g/l de $TaCl_5$.

Le catalyseur final Cu(3) + Nb(1) + Ta(1) + K(2)-/$TiO_2$ présente en test de combustion de la suie selon l'exemple 1, une valeur Tmax = 310°C et une sélectivité Sco = 6-9%.

EXEMPLE 11 : INFLUENCE DE LA TENEUR EN CUIVRE.

Le protocole opératoire de l'exemple 6 a été repris en faisant varier la concentration en cuivre déposé, de manière à préparer des catalyseurs avec des teneurs de 2, 3 et 4 mmol de Cu par gramme de support. Pour cela, les solutions cuivriques d'imprégnation contenaient respectivement 604, 906 et 1208 g/l de $Cu(NO_3)_2$,$3H_2O$.

Les catalyseurs obtenus ont été testés selon le protocole décrit dans l'exemple 1. Les résultats sont présentés sur la figure 2. L'augmentation de la teneur en cuivre modifie sensiblement l'allure des courbes de vitesse, dm/dt = f(T), en améliorant la combustion à basse température. Ainsi, pour le catalyseur Cu(4) + Nb(2) + K(2)/$La_2O_3$, on observe un début de combustion vers 200°C. Dès 250°C, on est pratiquement au maximum de la vitesse de combustion avec une valeur de Tmax étalée entre 250 et 360°C. La sélectivité Sco au maximum est égale à 6-8%.

Le même catalyseur Cu(4) + Nb(2) + K(2)/La$_2$O$_3$ a été testé en combustion de la suie à la température de 250°C, après une montée de température de 5°C/min. L'analyse gravimétrique montre que 50% de la suie sont brûlés après 15 min à 250°C, et 70% après 1 h.

Le catalyseur selon l'invention a en particulier pour avantages de présenter une bonne stabilité thermique (au moins jusqu'à 800°C) et une bonne stabilité à l'empoisonnement par le SO$_2$.

## Revendications

1. Catalyseur à constituants actifs multiples, dont au moins un est le métal Cu et un autre un alcalin sur un support inorganique réfractaire poreux, caractérisé en ce que ledit catalyseur associe, outre Cu et un alcalin, un autre constituant métallique, qui contient du niobium Nb et/ou du tantale Ta.

2. Catalyseur selon la revendication 1, caractérisé en ce que l'alcalin est le potassium.

3. Catalyseur selon la revendication 1 ou 2, caractérisé en ce que le support est choisi parmi un ou plusieurs des composés suivants : silice, alumine, silice-alumine, oxyde de titane, oxyde de lanthane, dioxomonocarbonate de lanthane.

4. Catalyseur selon l'une des revendications 1 à 3, caractérisé en ce que la teneur globale des constituants actifs rapportée au poids du support est comprise entre 1 et 20 mmol par gramme de support.

5. Catalyseur selon la revendication 4, caractérisé en ce que la teneur du constituant cuivre est de l'ordre de 4 mmol par gramme de support.

6. Catalyseur selon la revendication 4, caractérisé en ce que la teneur du constituant Nb et/ou Ta est de l'ordre de 2 mmol par grave de support.

7. Catalyseur selon la revendication 4, caractérisé en ce que la teneur en alcalin est de l'ordre de 2 mmol par gramme de support.

8. Préparation d'un catalyseur selon l'une quelconque des revendications 1 à 7, caractérisée en ce qu'elle s'effectue par imprégnations successives ou co-imprégnation du support poreux sec par des solutions de sels des constituants actifs, puis calcination à une température comprise entre 400 et 800°C dans un gaz oxydant ou inerte.

9. Moteur à combustion Diesel à conduit d'échappement des gaz de combustion équipé d'un filtre pour la combustion catalytique des suies, du type à constituants actifs multiples, dont au moins un est le métal Cu et un autre un alcalin sur un support inorganique réfractaire poreux, caractérisé en ce que ledit catalyseur associe, outre Cu et un alcalin, un autre constituant métallique, qui contient du niobium Nb et/ou du tantale Ta.

10. Moteur à combustion, du type Diesel, selon la revendication 9, caractérisé en ce que la teneur globale des constituants actifs rapportée au poids du support est comprise entre 1 et 20 mmol par gramme de support.

## Claims

1. Catalyst with multiple active constituents, of which at least one is the metal Cu and another an alkaline on a porous inorganic refractory support, characterised in that other than Cu and an alkaline, said catalyst associates another metallic constituent which contains niobium Nb and/or tantalum Ta.

2. Catalyst according to claim 1, characterised in that the alkaline is potassium.

3. Catalyst according to claims 1 and 2, characterised in that the support is selected from one or more of the following constituents: silicon, aluminum, aluminium silicate, titanium oxide, lanthanum oxide, lanthanum dioxomonocarbonate.

4. Catalyst according to one of claims 1 to 3, characterised in that the global content of active constituents in relation to the weight of support is between 1 and 20 mmol per gram of support.

5. Catalyst according to claim 4, characterised in that the copper constituent content is in the order of 4 mmol per gram of support.

6. Catalyst according to claim 4, characterised in that the Nb and/or Ta constituent content is of the order of 2 mmol per gram of support.

7. Catalyst according to claim 4, characterised in that the alkaline content is of the order of 2 mmol per gram of support.

8. Preparation of a catalyst according to any one of claims 1 to 7, characterised in that it is carried out by successive impregnations or by co-impregnation of the dry porous support with solutions of salts of the active constituents, then calcination at a temperature of between 400 and 800° C in an oxidising or inert gas.

9. Diesel combustion engine with a combustion gas exhaust pipe fitted with a filter for the catalytic combustion of soots, of the type with multiple active constituents, at least one of which is the metal Cu and one other an alkaline, on a porous inorganic refractory support, characterised in that other than Cu and an alkaline, said catalyst associates another metallic constituent which contains niobium Nb and/or tantalum Ta.

10. Diesel-type combustion engine according to claim 9, characterised in that the global content of active constituents in relation to the weight of support is between 1 and 2 mmol per gram of support.

**Patentansprüche**

1. Katalysator mit mehreren aktiven Bestandteilen, von denen Wenigstens einer das Metall Kupfer ist und ein anderer ein Alkalimetall ist, auf einem porösen, feuerfesten, porösen anorganischen Träger, **dadurch gekennzeichnet**, daß der Katalysator außer Kupfer und einem Alkalimetall einen weiteren metallischen Bestandteil aufweist, der Niob Nb und/oder Tantal Ta enthält.

2. Katalysator nach Anspruch 1, **dadurch gekennzeichnet**, daß das Alkalimetall Kalium ist.

3. Katalysator nach Ansprüchen 1 oder 2, **dadurch gekennzeichnet**, daß der Träger ausgewählt ist aus einem oder mehreren der folgenden Zusammensetzungen: Siliciumoxyd, Aluminiumoxyd, Siliciumoxyd-Aluminiumoxyd, Titanoxyd, Lanthanoxyd, Lanthandioxomonocarbonat.

4. Katalysator nach einem der Ansprüche 1 bis 3, **dadurch gekennzeichnet**, daß der Gesamtgehalt der aufgebrachten aktiven Bestandteile bezüglich des Trägers zwischen 1 und 20 mmol pro Gramm Träger liegt.

5. Katalysator nach Anspruch 4, **dadurch gekennzeichnet**, daß der Gehalt des Bestandteils Kupfer in der Größenordnung von 4 mmol pro Gramm Träger liegt.

6. Katalysator nach Anspruch 4, **dadurch gekennzeichnet**, daß der Gehalt des Bestandteils Nb und/oder Ta in der Größenordnung von 2 mmol pro Gramm Träger liegt.

7. Katalysator nach Anspruch 4, **dadurch gekennzeichnet**, daß der Gehalt an Alkalimetall in der Größenordnung von 2 mmol pro Gramm Träger liegt.

8. Herstellung eines Katalysators nach einem der Ansprüche 1 bis 7, **dadurch gekennzeichnet**, daß sie eine aufeinanderfolgende oder gleichzeitige Imprägnierung des trockenen, porösen Trägers mit Salzlösungen der aktiven Bestandteile aufweist, sowie eine anschließende Aufheizung auf eine Temperatur zwischen 400 uund 800° C in einem oxydierenden oder inerten Gas.

9. Dieselmotor mit einer Auspuffleitung für die Verbrennungsgase, die mit einem Filter zur katalytischen Rußverbrennung versehen ist, welcher mehrere aktive Bestandteile aufweist, von denen wenigstens einer das Metall Kupfer ist und ein anderer ein Alkalimetall auf einem porösen, feuerfesten anorganischen Träger, **dadurch gekennzeichnet**, daß der Katalysator außer Kupfer und einem Alkalimetall einen anderen metallischen Bestandteil aufweist, welcher Niob Nb und/oder Tantal Ta enthält.

10. Dieselmotor nach Anspruch 9, **dadurch gekennzeichnet**, daß der Gesamtgehalt der aufgebrachten aktiven Bestandteile bezüglich des Gewichts des Trägers zwischen 1 und 20 mmol pro Gramm Träger liegt.

FIG.:1

INFLUENCE DE LA TENEUR EN CUIVRE SUR LA
TEMPERATURE DE COMBUSTION

FIG.:2